# EUROPEAN PATENT APPLICATION

(11) **EP 1 184 948 A2**
(43) Date of publication of application: **06.03.2002**
(21) Application number: 01203021.9
(22) Date of filing: 27.08.2001
(51) Int. Cl.: H01S 3/131

(54) **Diode pumped solid state lasers**

(30) Priority: 28.08.2000 US 649297
(71) Applicant: LASER ALIGNMENT, INC., Grand Rapids, Michigan 49546 (US)
(72) Inventor: Nagel, Gregory J., Byron Center, Michigan 49315 (US); Post, Brian M., Rockford, Michigan 49341 (US); Bourget, Paul L., Kentwood, Michigan 49508 (US)
(74) Representative: Brophy, David

(57) **Abstract**

A laser irradiating apparatus includes a laser light source, which generates a laser beam, and a driver circuit for driving the laser light source to generate the laser beam. The driver circuit drives the laser light source with electrical pulse signals and includes an optical power feedback loop. The optical power feedback loop detects the light intensity of the laser beam and generates feedback signals based on the intensity of the laser beam. The driver circuit adjusts the pulse frequency of the electrical pulse signals based on the feedback signals from the optical power feedback loop to drive the laser light source whereby the power output of the laser light source is substantially constant. For example, the laser light source may comprise a diode pump solid-state laser and, for example, may generate a laser beam in the visible spectrum, such as a green laser beam, a yellow laser beam, or a blue laser beam. Preferably, the driver circuit maintains the power output of the laser light source within a deviation of less than 10% of a target power output.

## Description

### TECHNICAL FIELD AND BACKGROUND OF THE INVENTION

The present invention relates to drivers for laser diodes and, more particularly, to drivers for diode pumped solid state lasers.

Conventional laser drivers use a simple linear regulator which sets a constant current or voltage in an attempt to set the power for the laser. As the laser diode environment changes, however, the optical power of the laser diode varies. In order to deal with the variation in the optical power of the diode, these linear regulators have included feedback loops. With the feedback loop, the regulator monitors the current through the laser, which is compared with a predetermined value corresponding to the desired optical power of the laser, and then increases or decreases the current accordingly. However, such feedback loops have not heretofore provided adequate regulation of the laser diodes and have resulted in added complexity to the circuit design, as well as a decrease in the overall efficiency of the circuit.

Laser systems, such as diode pumped solid-state or harmonic generators, typically include secondary resident cavities which have independent time functions and non-linear optical gain structures. For example, diode pumped lasers typically include a laser diode driver and a series of crystal and laser cavities, which define several stages through which the light passes in order to generate the desired laser beam. Each crystal absorbs light and holds the light for a period of time before releasing the light, which creates a time delay. Since these regulators try to set the input current to the laser pump based on the measured output of the laser, the regulator cannot hold a steady drive current or voltage at the laser diode given the time lag between each stage of the diode pump. As a result, typical linear regulators can cause the power output of the laser to fluctuate and, further, can create a current overdrive condition because the optical output is dependent on non-linear time and gain functions. The more non-linear the optical output functions the greater risk of stress and damage to the diode pump. Depending on the laser beam application, this fluctuation and current override condition can impair the use of the laser beam.

Consequently, there is a need for a laser driver which drives the laser to produce a constant power output while maintaining the drive current below the maximum current threshold of the laser and, therefore, extending the life of the diode. Furthermore, there is a need for a laser diode driver which consumes less power and exhibits better efficiency than conventionally known laser drivers.

### SUMMARY OF THE INVENTION

The invention provides a laser irradiating apparatus as claimed in claim 1.

As used herein, the term "laser optical output characteristic" embraces characteristics of the laser output such as laser intensity, or the laser light source's fluorescence time frequency domain, as opposed to an input characteristic of the laser source such as the supply voltage or current.

Accordingly, in one embodiment of the present invention a laser driver achieves a constant power output while exhibiting a lower power consumption. The laser driver uses a pulse frequency modulator which varies the frequency of the drive signal to match the fluorescence time frequency domain of the laser diode and, as a result, achieves significantly improved regulation of the output of the laser and, furthermore, limits the current supplied to the laser diode to minimize the risk of damage to the laser diode.

In one form of the invention, a laser irradiating apparatus includes a laser light source, which generates a laser beam, and a driver circuit for driving the laser light source. The driver circuit drives the laser light source with electrical pulse signals and includes an optical power feedback loop, which detects a light intensity of the laser beam and generates feedback signals based on the intensity of the laser beam. The driver circuit adjusts the pulse frequency of the electrical pulse signals based on the feedback signals from the optical power feedback loop whereby the power output of the laser light source is substantially constant.

In one aspect, the laser light source comprises a diode pumped solid state laser. Furthermore, the laser light source preferably produces a laser in the visible spectrum, for example a green laser beam, a yellow laser beam, or a blue laser beam or the like. Alternately, the laser light source generates an infrared laser beam.

In other aspects, the optical power feedback loop includes at least one photodiode. Optionally, the optical power feedback loop may further include at least one beam splitter, which directs light from said laser beam and polarizes the light onto the photodiode.

In other aspects, the driver circuit drives the laser light source within a deviation of less than 10% of a target power output. Preferably, the driver circuit drives the laser light source within a deviation of less than 5% of the target power output.

According to another form of the invention, the laser irradiating apparatus includes a laser light source, which generates a laser beam, and a driver circuit for driving the laser light source. The driver circuit includes an optical feedback loop, which includes at least one photodiode for detecting the light intensity of the laser light beam produced by the laser light source. The driver circuit adjusts the electrical pulse signals, which it uses to drive the laser light source, based on the feedback signals from the optical feedback loop. The laser irradiating apparatus further includes first and second beam splitters to direct the light from the laser to the photodiode. The first and second beam splitters are aligned with the laser, with the second beam splitter aligned so that its polarization angle is oriented generally 90° to the polarization angle of the first beam splitter whereby both first and second vector components of the light from the laser beam are detected by the photodiode.

In further aspects, the laser irradiation apparatus includes two photodiodes, with one aligned with the first beam splitter and the second photodiode aligned with the second beam splitter.

In another aspect, the driver adjusts the pulse frequency of the electrical pulse signals, which it uses to drive the laser light source, based on the feedback signals from the optical feedback loop.

In yet another form of the invention, a laser irradiating apparatus includes a laser light source, which generates a laser beam, and a driver circuit which generates electrical drive signals having a pulse frequency. The driver circuit drives the laser source with the electrical drive signals and is responsive to the fluorescence time frequency domain of the laser light source and adjusts the pulse frequency of the electrical dive signals as a function of the fluorescence time frequency domain whereby the driver circuit maintains regulation of the power output of the laser light source within at least 10% of a target power output for the laser light source.

In one aspect, the driver circuit includes a feedback loop that detects the intensity of the laser beam and generates feedback signals based on the intensity of the laser beam. The driver circuit adjusts the pulse frequency of the electrical pulse signals based on the feedback signals from the feedback loop.

In further aspects, the driver circuit includes a reference voltage input, with the driver circuit comparing the voltage of feedback signal to the reference voltage input and initiating a switching cycle when the feedback signal is less than the reference voltage input more than a selected deviation and terminating a switching cycle when the voltage of the feedback signal exceeds the reference voltage more than a selected deviation. In further aspects, the driver circuit includes a current-sense input. The driver circuit compares the current-sense input to a desired maximum current and terminates the switching cycle when the current-sense input exceeds the maximum current.

The laser driver of the present invention drives the laser to produce a substantially constant power output. Furthermore, the laser driver is invariant to the laser's fluorescence time frequency domain which can vary due operating conditions, environmental conditions, and changes manufacturing processes, since the driver matches its drive pulse frequency to the fluorescence time frequency domain of the laser light source. Because the driver only drives the laser to maintain regulation of the laser, the driver operates more efficiently and with less stress on the laser.

These and other advantages, purposes, and features will become more apparent from a review of the drawings and descriptions which follow.

### DETAILED DESCRIPTION OF THE DRAWINGS

FIG. 1 is a block diagram of a laser irradiation system incorporating a laser driver circuit of the present invention;
FIG. 1A is an enlarged block diagram of the laser of FIG. 1;
FIG. 2 is a circuit diagram of the laser driver circuit of FIG. 1;
FIG. 3 is an enlarged logic diagram of a pulse frequency modulator circuit of the laser driver circuit of FIG. 2;
FIG. 4 is a graph illustrating the voltage input of the laser driver of the present invention to the laser diode pump and the corresponding laser diode output voltage;
FIG. 5 is an enlarged block diagram of the laser, a beam splitter, and a photodiode in FIG. 1;
FIG. 6 is a plot of the vector polarization of the laser beam resulting from the beam splitter of FIG. 5;
FIG. 7 is a plot of a second vector polarization of the laser beam through the beam splitter of FIG. 5;
FIG. 8 is a block diagram of a second embodiment of the laser irradiation system of the present invention incorporating two beam splitters;
FIG. 9 is a plot of the vector polarization of the laser beam resulting from the first beam splitter of FIG. 8; and
FIG. 10 is a plot of the vector polarization of the laser beam of the second beam splitter of FIG. 8.

### DETAILED DESCRIPTION OF THE PREFERRED EMBODIMENTS

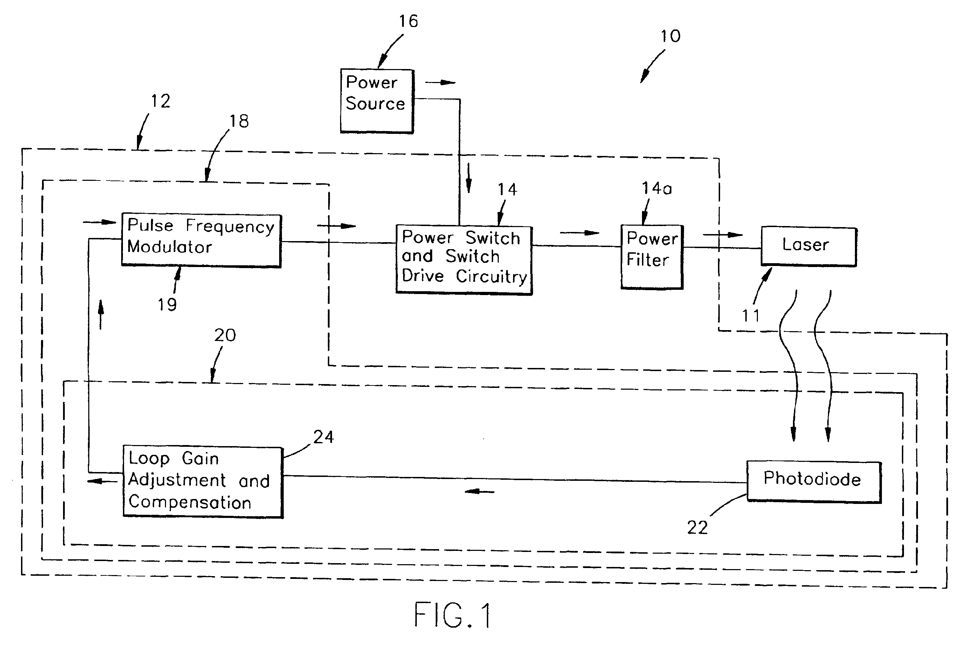

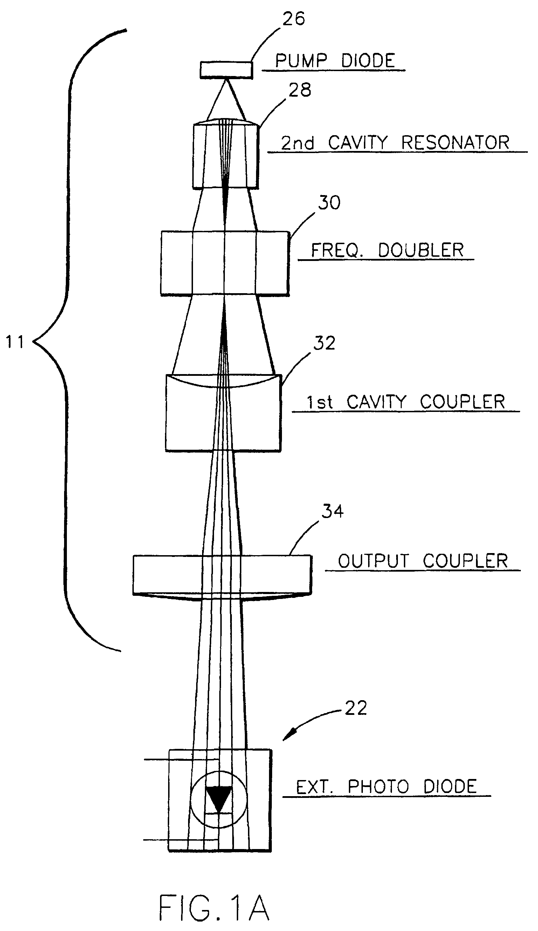

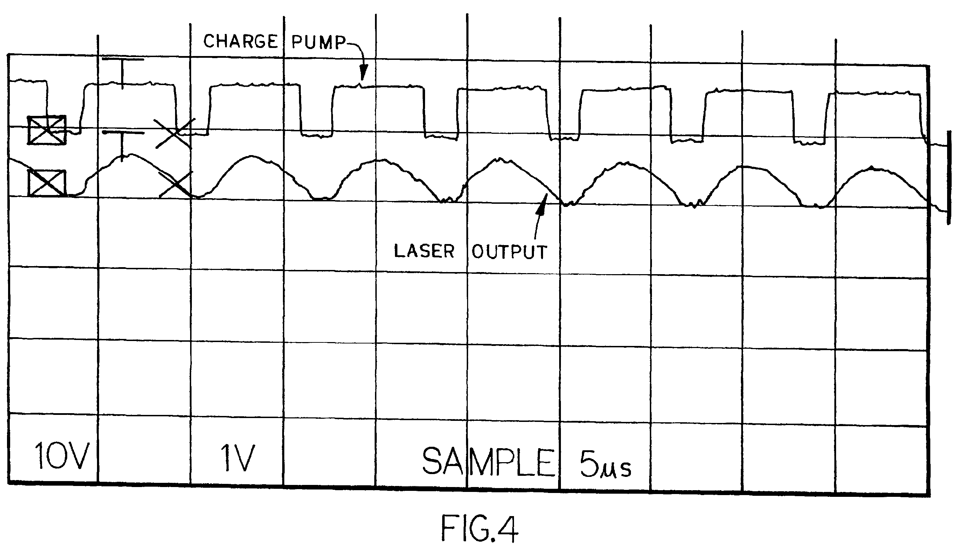

Referring to FIG. 1, the numeral 10 generally designates a laser irradiation system and apparatus of the present invention, which includes a laser 11 and a laser driver circuit 12. Laser driver circuit 12 drives laser 11 so that laser 11 produces a laser beam with a substantially constant power output and preferably drives laser 11 at efficiencies in a range of at least 60% to 90% and, in some applications, at efficiencies in a range of approximately 80% to 90%. The laser may generate a UV laser beam, an infrared laser beam, or a laser beam in the visible spectrum, such as a blue, green, or yellow laser beams. Furthermore, the power output of laser 11 is preferably regulated within at least 10% and, more preferably, within about 5% and, most preferably, regulated in a range of about 1% - 2% of the desired power output of the laser. Moreover, laser driver circuit 12 of the present invention is substantially invariant to the non-linear gains and time cycles of the laser and, further, produces an electrical drive pulse signal that substantially matches to the fluorescence time frequency domain of the components comprising laser 11 (see FIG. 4). As a result, the power output of the laser is unaffected by changes in the characteristics of the components due to manufacturing processes or due to environmental or operating conditions.

As best seen in FIG. 1, laser driver circuit 12 includes a power switch and switch drive circuitry 14 and a power filter 14a, which converts the voltage of the power source 16 into a DC input voltage for a controller circuit 18 and for laser 11 as regulated by controller circuit 18. As will be described in greater detail below, controller circuit 18 is a current limited pulse frequency modulated (PFM) control circuit which maintains regulation of the power output of laser 11 by driving laser 11 with a variable switching frequency voltage that varies according to the fluorescence time of the components comprising laser 11. As a result, driver circuit 12 generates electrical pulse signals that match the fluorescence time frequency domain of laser 11 and can maintain regulation of the power output of laser 11, as noted above, within at least 10% of the desired power output of the laser.

Referring again to FIG. 1, circuit 18 includes a pulse frequency modulator circuit 19 and an optical feedback loop 20. Using input voltage signals from optical feedback loop 20, pulse frequency modulator circuit 19 sets the switching frequency of controller circuit 18 to match the fluorescence time of the components comprising laser 11 and generates electrical pulse signals only as needed to maintain regulation of the power output of laser 11. This eliminates the current drain associated with constant frequency pulse width modulation (PWM) controllers which produce constant switching. In addition, by setting the switching frequency of the controller circuit to match the fluorescence time of laser 11, the current driving laser 11 will not exceed the maximum current threshold of laser 11.

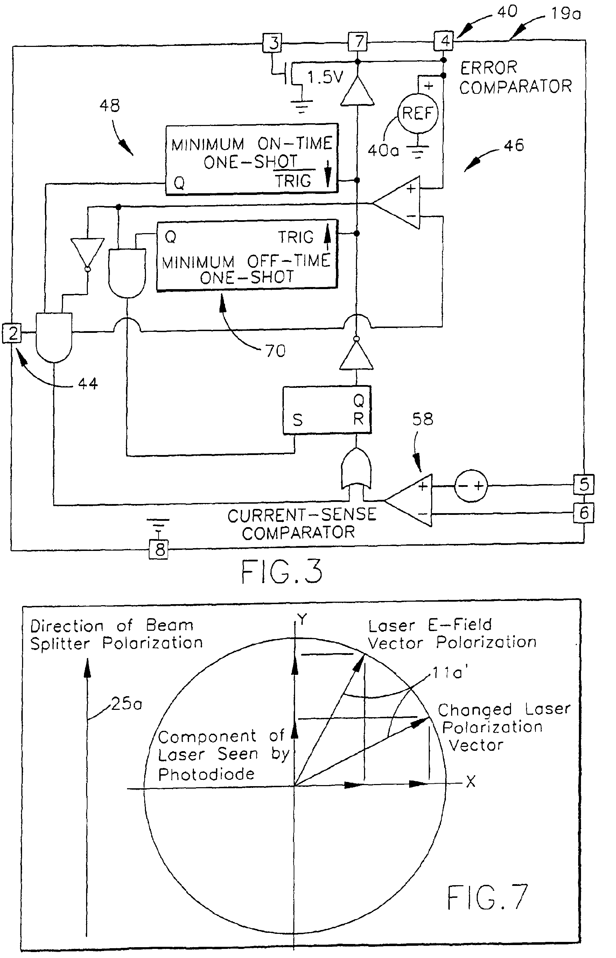

Optical feedback loop 20 includes a photodiode 22 and a loop gain adjustment and compensation circuit 24, described in greater detail in reference to FIG. 3. Photodiode 22 receives the optical energy output of laser 11 and converts the optical energy back to an electrical signal which is then filtered and converted into a feedback voltage signal by loop gain adjustment and compensation circuit 24. The components of circuit 24 are selected based on the different type and power levels of photodiode 22 and laser 11. In addition, the response profiles, such as responses to disturbance input such as thermal, physical, or external light sources, and stability of the system can be adjusted in feedback loop 20 in loop gain and compensation circuit 24.

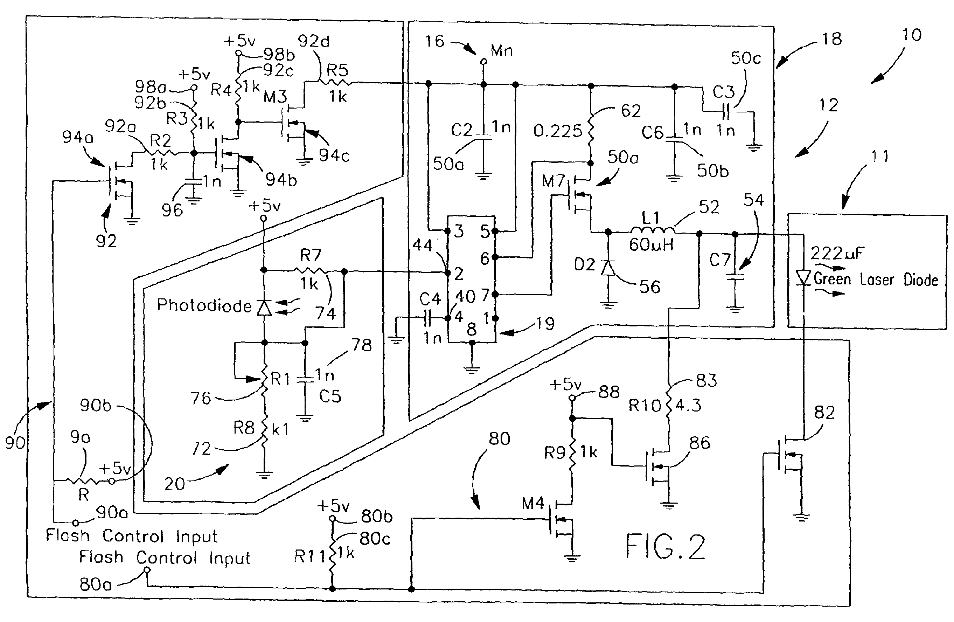

Referring to FIG. 2, laser 11 comprises a diode pump solid-state (DPSS) laser and includes a pump diode 26, a second cavity resonator 28, a first cavity coupler 32 and an output coupler 34, which collimates the light from coupler 32. Resonator 28 comprises a crystal, such as a vanadate crystal, which absorbs light from diode 26 and then emits another laser light. This laser light resonates between resonator 28 and cavity coupler 32. Preferably positioned between resonator 28 and coupler 32 is a frequency doubler 30 which doubles the frequency of resonator 28. Preferably resonator 28 is a 1064-nanometer resonator, which is then doubled by doubler 30 to become a 532-nanometer resonator. As a result, laser 11 produces a green laser beam. As previously noted, laser 11 may produce a laser beam in the UV, visible light, or infrared spectrums. In the visible light spectrum, the laser beam may comprise a green, yellow, or blue laser beam, for example. As will be understood by those skilled in the art, each stage of the diode pumped solid-state laser has a time delay. Since crystals absorb light, hold the light for period of time, and then release it, time delays occur. For example, lasers can have time delays on the order of roughly 20 microseconds. As will be more fully described below, with feedback input signals from feedback loop 20, control circuit 18 determines the natural resonant frequency or the fluorescence time frequency domain of the laser beam based on the capacitive time delays in the components comprising the laser and tunes to the frequency of the electrical pulse signals like a phase-lock loop so that output of controller circuit 18 does not exceed the damage threshold of laser 11.

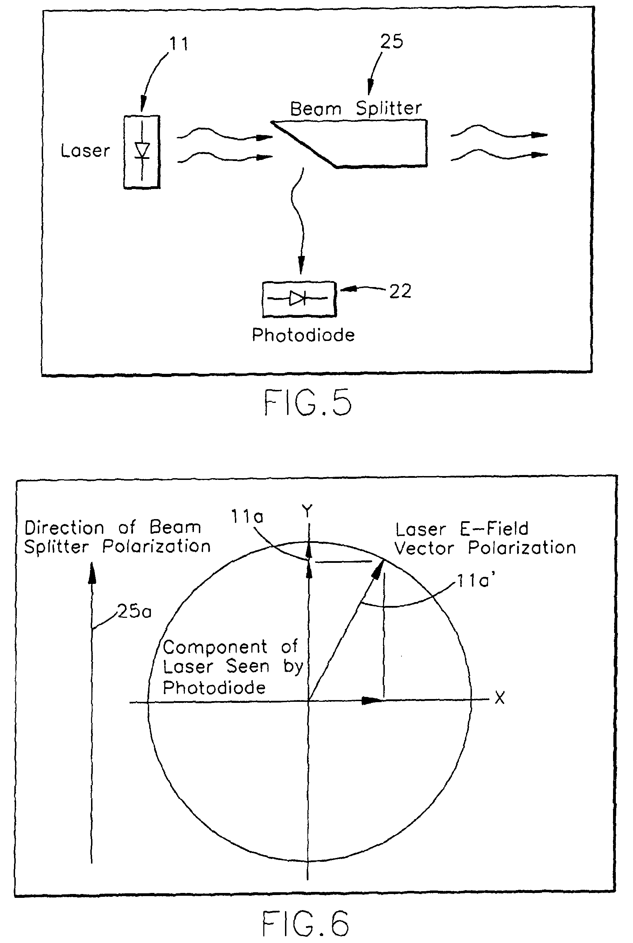

Referring to FIG. 5, laser irradiation system 10 of the present invention preferably includes a beam splitter 25. Beam splitter 25 splits off a portion of the outgoing energy from laser 11 and polarizes the light in the laser beam produced by laser 11 and directs the polarized light to photodiode 22. Photodiode 22 then converts the incident light into the feedback signal with the magnitude of the feedback signal proportional to the input optical power. As will be more fully described below, controller circuit 18 compares the feedback signal to a selected fixed reference. When the feedback signal is greater than the fixed reference, controller circuit 18 increases the drive current to laser 11 to increase the laser output power. In contrast, when controller circuit 18 detects that the feedback signal is greater than the selected fixed reference, the controller circuit 18 reduces the drive current to the laser to reduce the laser output power.

Referring to FIG. 3, pulse frequency modulator circuit 19 includes a comparator 46 which compares a reference voltage at node 40, which is provided by reference voltage supply 40a, to a feedback input voltage at node 44 provided by signals from feedback loop 20 to determine whether to initiate a switching cycle. As previously described, feedback loop 20 detects the intensity of laser 11 using photodiode 22, with loop gain adjustment and compensation circuit 24, which includes feedback loop resistors 72, 74, and 76 and a capacitor 78, converting the current through diode 22 into a voltage at node 44. In addition, resistors 72, 74, and 76 and capacitor 78 provide a filter for the feedback loop signal. Capacitor 78 compensates for stray capacitance and stabilizes the feedback voltage at node 44. Pulse frequency modulator circuit 19 also includes a flip flop 48. When comparator 46 detects that the feedback voltage at 44 is too low compared to the reference voltage at 40 and varies greater than a selected deviation from the reference voltage, comparator 46 sets flip flop 48 which in turn turns on a transistor 50, such as an N-channel MOSFET, which initiates a switching cycle. The supply current loop for laser 11 is formed by supply input voltage 16, a plurality of capacitors 50a, 50b, and 50c, transistor 50, an inductor 52, and an output capacitor 54. Transistor 50 is connected to inductor 52 so that when transistor 50 is turned on, inductor 52 ramps up slowly. When inductor 52 ramps up, inductor 52 transfers a charge into output capacitor 54 and laser 11. When transistor 50 is turned off, the magnetic field in inductor 52 collapses and diode 56 is turned on. The current through inductor 52 then ramps back down, transferring its stored energy to output capacitor 54 and laser 11. In other words, output capacitor 54 stores energy when the inductor current is high and releases it when the inductor current is low.

Pulse frequency modulator circuit 19 further includes a current-sense comparator 58 (FIG. 3) which is connected to the supply input voltage 16 by a current-sense resistor 62. Transistor 50 turns off when the current-sense threshold is exceeded or when the output voltage is in regulation so that circuit 18 provides a current-limited pulse frequency modulated control for laser 11. Flip flop 48 resets when transistor 50 turns off; otherwise, transistor 50 remains on, allowing a duty cycle of up to 100%. Once transistor 50 is turned off, a minimum time-off comparator 70 keeps transistor 50 turned off. As a result, controller circuit 18 pulses only as needed to maintain regulation of laser 11 and also turns off when the current through the supply current loop exceeds the laser current capacity.

Referring again to FIG. 2, optionally, drive circuit 12 includes at least one laser flash control circuit 80 with a flash control input 80a. Flash control circuit 80 selectively turns laser 11 on and off to create a flashing laser beam to suit the desired application of the laser beam. Circuit 80 includes a transistor 82, such as an N-channel MOSFET, and a voltage supply 80b and resistor 80c, which together with flash control input 80a, regulate transistor 82. In addition, flash control circuit 80 includes a switching circuit 84, which includes a pair of resistors 84a and 84b and a pair of transistors 86a and 86b, such N-channel MOSFETs, which connect between flash control input 80a and voltage supply 80b and resistor 80c and the supply current loop between inductor 52 and laser 11. Switching circuit 84 also connects to a voltage supply 88, for example a five volt voltage supply, and which together with transistor 82 selectively draws current away from laser 11 to turn laser 11 on and off to flash laser 11. When transistor 82 is turned on the current through laser 11 will have a path to ground. When transistor 82 turns off, the current through the current supply loop passes to ground through switching circuit 84 instead of through laser 11.

Drive circuit 12 optionally includes a second flash control circuit 90. Second flash control circuit 90 includes a voltage supply 90b and resistor 90c and a second flash control input 90a. and connects to current supply voltage 16. Flash control circuit 90 includes a switching circuit 92 which comprises a plurality of cascading of resistors 92a, 92b, 92c, and 92d, transistors 94a, 94b, and 94c, and a capacitor 96 which are connected to voltage supplies 98a and 98b. Similarly, second flash control circuit 90 selectively draws current away from the supply current loop based on the input from flash control input 90a so that laser 11 will selectively flash, for example, at another frequency than the first flash control circuit. It should be understood that the selection of the resistors, capacitors, and transistors comprising both flash control circuits is based on the desired flash frequency and the components comprising the laser.

Preferably, pulse frequency modulator circuit 19 is provided by a chip, such as MAX 1627 available from MAXIM. The MAX 1627 chip is a 100% duty-cycle, high-efficiency, step-down DC-DC controller and includes 8 pins. Pin 1 for the MAXIM 1627 chip, which is internally connected to an on-chip voltage divider, does not supply current and remains unconnected. Pin 2 is the feedback input pin for the adjustable output operation of the pulse frequency modulator circuit and is connected to feedback loop 20. Pin 3 of the MAXIM chip includes an active high shutdown input. When the active high shutdown input pin is driven high, the reference, output, and external transistor 50 are turned off. Preferably, pin 3 is connected to the current supply loop so that it can detect a current overdrive condition. Pin 4 provides the reference voltage and includes an internal reference voltage supply and is preferably connected to an external capacitor 42, which stabilizes the reference voltage. Pin 5 represents the positive voltage supply input and is connected to the current supply loop. Pin 6 is a current-sense input, which is connected to the current supply loop through current-sense resistor 62. Pin 7 represents the gate drive for external transistor 50. Pin 8 is a ground pin. It can be appreciated that by using a chip, a compact and easy to assemble control circuit is provided.

Laser 11 emits a highly polarized electric field, which is preferably oriented so that the polarization of the laser matches up with the polarization of beam splitter 25 so that full magnitude of the vector component of the laser beam is seen by photodiode 22. Referring to FIG. 5, the direction of the polarization of beam splitter 25 is shown indicated by the arrow labeled 25a, and the direction of polarization of the laser is shown indicated by the arrow 11a. When the polarization of the laser is aligned with the polarization angle of the beam splitter, the photodiode sees the full magnitude of the laser vector; however, as the polarization angle shifts as indicated by arrows labeled 11a' and 11a" (FIG. 6), the component seen by the photodiode decreases. As seen more clearly in FIG. 6, when the polarization of laser 11 does not match up with the polarization of beam splitter 25, only vector components of the electric field in the direction of the beam splitter polarization is reflected onto photodiode 22. As a result, even though the total vector length stays the same from the laser, the length of the polarized vector components sent to photodiode 22 reduce.

In order to compensate for the variations in the polarization angle of the laser, which can occur, for example, due to temperature change, a laser irradiation system 110 of the present invention includes a second beam splitter 125a. Laser irradiation system and apparatus 110 is similar to laser irradiation system and apparatus 10 and, for example, includes a laser 111 and a driver circuit 112. Driver circuit 112 includes a controller circuit 118, similar to circuit 18 of the previous embodiment, which varies the frequency of the electrical drive pulse signals to laser 111 to maintain regulation of the power output of laser 111 based on the fluorescence time frequency domain of laser 111. In addition, like the first embodiment, driver circuit 112 includes a power switch and switch drive circuit 114 and filter 114a and a control feedback loop 120. Again, similar to the first embodiment, feedback loop 120 includes at least one photodiode 122, a loop gain adjustment and compensation circuit 124, and a beam splitter 125. For further details and description of the various components, reference is made to the first embodiment.

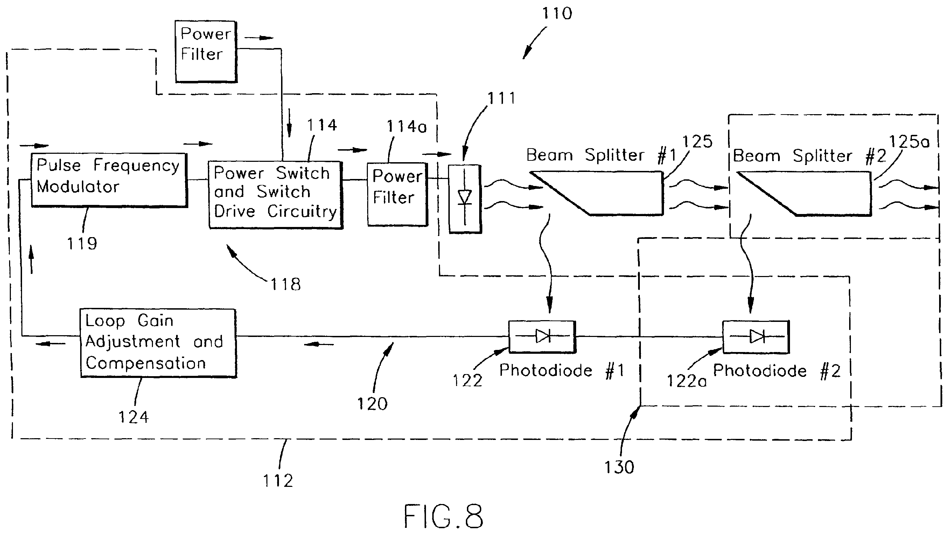

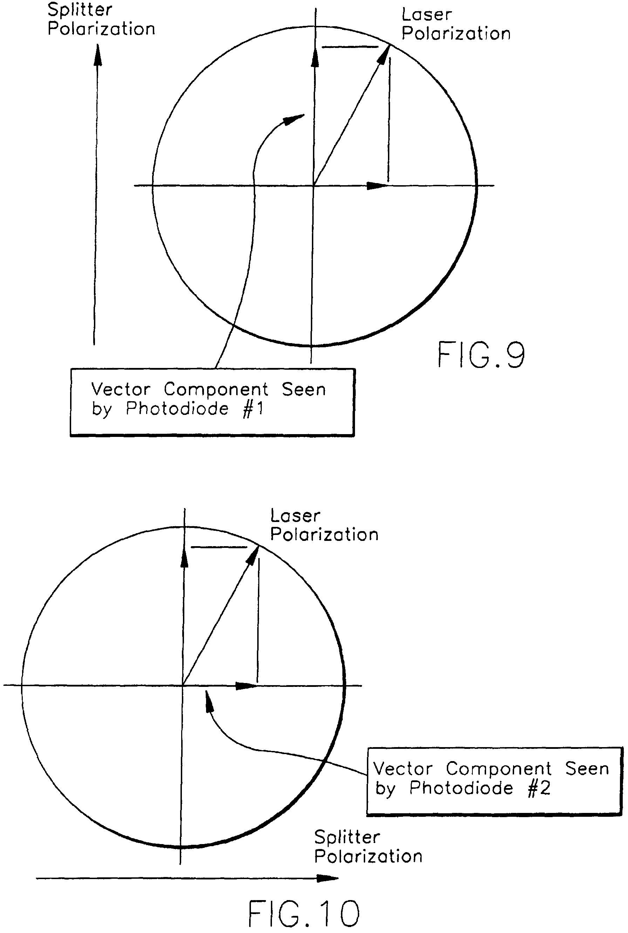

As best seen in FIG. 8, second beam splitter 125a is aligned with first beam splitter 125. However, the polarization angle of second beam splitter 125a is preferably oriented generally 90° to the polarization angle of the first beam splitter (the boxed in portions label 130 are rotated 90° for clarity). In addition, driver circuit 112 optionally includes a second photodiode 122a to which second beam splitter 125a directs light from laser 111. In this manner, both vector components of the laser beam are now part of the feedback and control process (see FIGS. 9 and 10). Therefore, feedback loop 120 is invariant to changes in polarization of the laser beam produced by the laser. In addition, an initial orientation of the laser's electric polarization is no longer required as would be preferred in the previous embodiment. Therefore, shifts in laser polarization due to changes in temperature, vibration, aging, etc., have no effect on the feedback loop 120.

Optionally, a single photodiode which includes portions aligned with both beam splitters may be used. For example, a semiconductor arcuate-shaped diode may be provided that spans the two beam splitters and, further, includes receiving surfaces oriented at 90° to one another in order to receive both vector components from the beam splitters.

The present invention provides a laser beam regulator which is invariant to the fluorescent time of the components comprising the laser. The feedback and regulation of the laser driver is based on constant optical power instead of constant current of voltage associated with conventional regulators. As a result, the present driver increases the efficiency from 40% to 50% efficiencies, associated with conventional drivers, to at least 60% and, preferably, between 60% and 90% and, more preferably, between 80% and 90%. Furthermore, the laser irradiation system accommodates manufacturing variability and can provide a constant power regardless of the variability between optical units because the driver varies the frequency of the drive signals to the laser based on the fluorescence time frequency domain of the laser. Since the driver biases the laser to an optimal operating power without over-driving the laser, the present laser driver extends the lifetime of the optical device. In addition, although described in the context of a buck mode, the driver of the present invention may also be used in a boost mode where the optical device requires a higher voltage than the input source. This boost mode can be achieved by modifying the current supply loop circuitry. It should be understood that the present driver can be used in various applications including lasers used for construction including excavation, controls or the like, and medical uses, such as surgery, imaging, photo chemistry, spectroscopy, and telecommunications, such as with fiber optics. Furthermore, the present driver can be used for most, if not all, solid-state type lasers.

While several forms of the invention have been shown and described, other forms will now be apparent to those skilled in the art. Therefore, it will be understood that the embodiments shown in the drawings and described above are merely for illustrative purposes, and are not intended to limit the scope of the invention which is defined by the claims which follow.

## Claims

1. A laser irradiating apparatus comprising:
a laser light source generating a laser beam and having a power output; and
a driver circuit for driving said laser light source to generate said laser beam, said driver circuit generating an electrical pulse signal and driving said laser light source with said electrical pulse signal, said driver circuit being responsive to a laser optical output characteristic of said laser light source and adjusting said electrical pulse signal based on said laser optical output characteristic to drive said laser light source.

2. The laser irradiating apparatus according to Claim 1, wherein said laser light source comprises a diode pump solid state laser.

3. The laser irradiating apparatus according to Claim 2, wherein said laser light source generates a laser beam in the visible spectrum.

4. The laser irradiating apparatus according to Claim 3, wherein said laser light source generates one of a green laser beam, a yellow laser beam, and a blue laser beam.

5. The laser irradiating apparatus according to Claim 2, wherein said laser light source generates an infrared laser beam.

6. The laser irradiating apparatus according to any preceding claim, wherein said driver circuit maintains said laser light source at a substantially constant power output.

7. The laser irradiating apparatus according to Claim 6, wherein said driver circuit maintains said laser light source within a deviation of less than 10% of a target power output.

8. The laser irradiating apparatus according to Claim 7, wherein said driver circuit drives said laser light source within a deviation of less than 5% of said target power output.

9. The laser irradiating apparatus according to any preceding claim, wherein said laser optical output characteristic comprises a light intensity of said laser beam and wherein said driver circuit includes an optical feedback loop, said optical feedback loop detecting said light intensity of said laser beam and generating a feedback signal based on said intensity of said laser beam, said driver circuit adjusting said electrical pulse signal based on said feedback signal.

10. The laser irradiating apparatus of claim 9, wherein said electrical pulse signal has a pulse frequency, and wherein said driver circuit adjusts said pulse frequency based on said feedback signal.

11. The laser irradiating apparatus according to Claim 9 or 10, wherein said optical feedback loop includes at least one photodiode for detecting said light intensity of said laser beam.

12. The laser irradiating apparatus according to Claim 11, wherein said optical power feedback loop includes at least one beam splitter, said beam splitter directing light from said laser beam to said photodiode.

13. The laser irradiating apparatus according to Claim 11, further comprising
a first beam splitter directing light from said laser beam to said photodiode and polarizing said light onto said photodiode; and
a second beam splitter aligned with said first beam splitter, said second beam splitter having a polarization angle oriented generally 90° to a polarization angle of said first beam splitter whereby both first and second vector components of said light from said laser beam are detected by said photodiode.

14. The laser irradiating apparatus according to Claim 13, wherein said at least one photodiode comprises first and second photodiodes, said first beam splitter directing light to said first photodiode, and said second beam splitter directing light to said second photodiode.

15. The laser irradiating apparatus according to any preceding claim, wherein said laser optical output characteristic comprises a fluorescence time frequency domain of said laser light source, said electrical pulse signal has a pulse frequency, and said driver circuit adjusts said pulse frequency as a function of said fluorescence time frequency domain

16. The laser irradiating apparatus according to Claim 15, wherein said driver circuit adjusts said pulse frequency to substantially match said fluorescence time frequency domain of said laser light source.

17. The laser irradiating apparatus according to Claim 9 or any claim dependent thereon, wherein said driver circuit includes a reference voltage, said driver circuit comparing a voltage of said feedback signal to said reference voltage and initiating a switching cycle when said voltage of said feedback signal varies from said reference voltage input a selected deviation and terminating said switching cycle when said voltage of said feedback signal exceeds said reference voltage by a selected deviation.

18. The laser irradiating apparatus according to Claim 17, wherein said driver circuit includes a current-sense input, and said driver circuit comparing said current-sense input to a desired maximum threshold and terminating a switching cycle when said current-sense input exceeds said threshold.

19. The laser irradiating apparatus according to any preceding claim, further comprising a laser flash control circuit, wherein said flash control circuit selectively turns on and off said laser light source to flash said laser beam.
